(19) Europäisches Patentamt
European Patent Office
Office européen des brevets

(11) Veröffentlichungsnummer: **0 014 907**
**B1**

# (12) EUROPÄISCHE PATENTSCHRIFT

(45) Veröffentlichungstag der Patentschrift: **12.05.82**

(51) Int. Cl.³: **C 09 B 67/20,** C 09 B 67/46, C 09 D 7/12

(21) Anmeldenummer: **80100628.9**

(22) Anmeldetag: **07.02.80**

## (54) Pigmentzubereitungen und diese Zubereitungen enthaltende Lack- oder Druckfarben.

(30) Priorität: **17.02.79 DE 2906111**

(43) Veröffentlichungstag der Anmeldung: **03.09.80 Patentblatt 80/18**

(45) Bekanntmachung des Hinweises auf die Patenterteilung: **12.05.82 Patentblatt 82/19**

(84) Benannte Vertragsstaaten: **CH DE FR GB IT**

(56) Entgegenhaltungen:
**DE-A-1 767 822**
**DE-A-2 041 033**
**FR-A-2 261 322**
**FR-A-2 338 314**

(73) Patentinhaber: **BASF Aktiengesellschaft, Carl-Bosch-Strasse 38, D-6700 Ludwigshafen (DE)**

(72) Erfinder: **Kranz, Joachim, Dr., Rheinrugenstrasse 22, D-6700 Ludwigshafen (DE)**
Erfinder: **Sappok, Reinhard, Dr., Langgarten 15, D-6900 Heidelberg (DE)**

EP 0 014 907 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Pigmentzubereitungen und diese Zubereitungen enthaltende Lack- oder Druckfarben

Die vorliegende Erfindung betrifft neue Pigmentzubereitungen, welche in der Anwendung verbesserte Eigenschaften, wie Glanz und Fließverhalten und hohe Farbstärke aufweisen.

Druckfarben und Lackfarben sind Bindemittel und weitere Hilfsmittel enthaltende Dispersionen von Pigmenten. Das rheologische Verhalten dieser Farben wird zu einem wesentlichen Teil durch das Pigment bestimmt. So liegen in zähen (dicken), praktisch nicht mehr fließfähigen oder thixotropen Farben das bzw. die Pigmente praktisch vollständig bis zu einem erheblichen Anteil in geflockter Form vor. Solche Farben geben — neben dem nachteiligen Fließverhalten — farbschwache und weniger glänzende Färbungen als Farben, in denen das Pigment nicht geflockt ist.

Leichter anwendbare Farben können zwar erhalten werden, wenn der Pigmentgehalt verringert wird. Dies ist jedoch in vielen Fällen nicht erwünscht.

Aus der Literatur sind bereits Zusätze für Pigmente bekannt, welche eine Flockung der Pigmente in Druck- und Lackfarben vermindern oder sogar ganz verhindern sollen.

So werden in der DE-B-1 767 822 Pigmentzubereitungen beschrieben, die neben dem Pigment eine praktisch farblose Verbindung enthalten. Die farblose Verbindung trägt mindestens eine Harnstoff- oder Urethangruppe und mindestens eine nicht direkt an einen aromatischen Kern gebundene basische Aminogruppe, die vorzugsweise tertiär ist. Die farblosen Verbindungen werden durch Umsetzen von Isocyanaten, insbesondere von Diisocyanaten mit Aminoalkoholen, Polyaminen oder vorzugsweise Diaminen erhalten, wobei in den Aminoalkoholen die Aminogruppe bzw. in den Poly- und Diaminen eine Aminogruppe vorzugsweise tertiär sein sollte.

Aus der DE-A-2 701 292 sind Pigmentpräparate bekannt, die Farben und Lacken verbesserte rheologische Eigenschaften und den mit diesen Farben erhaltenen Färbungen erhöhten Glanz und verbesserte Farbstärken verleihen. Die Präparate enthalten neben den Pigmenten eine oder mehrere farblose Verbindungen, die ein oder mehrere basische Stickstoffatome an einem Pyridin- oder Benzimidazolsystem und mindestens eine Harnstoff- und/oder Urethangruppe aufweisen. Diese farblosen Zusatzstoffe werden durch Reaktionen von Diisocyanaten mit mono- oder bifunktionellen Amino- oder Hydroxyderivaten einer Pyridin- oder Benzimidazolverbindung und gegebenenfalls weiteren Mono- oder Dihydroxyamino-Verbindungen, welche keine basischen heterocyclischen Stickstoffatome enthalten, hergestellt.

Aus der DE-A-2 041 033 sind Dispersionsmittel für Feststoffe, z. B. für Pigmente bekannt, die Polyharnstoffe enthalten. Diese Polyharnstoffe enthalten mindestens 2 Harnstoffgruppen und mindestens 2 Gruppen, die jeweils eine Alkyl-, Alkenyl- oder Alkapoylenylgruppe mit mindestens 8 Kohlenstoffatomen enthalten und sind in organischen Lösungsmitteln löslich.

Nach den Angaben auf Seite 8 der Beschreibung werden diese Polyharnstoffe durch Umsetzen von Isocyanaten, insbesondere Polyisocyanaten mit Mono- und/oder Polyaminen erhalten. Nach den Angaben auf dieser Seite sind Diamine besonders geeignet, aus denen polymere Harnstoffe entstehen. Auch sind Polyharnstoffe, die aus polymeren Isocyanaten erhalten werden, besonders bevorzugt.

In den Beispielen werden als Dispersionsmittel neben polymeren Harnstoffen nur Bisharnstoffe auf der Basis 2,4-/2,6-Toluylendiisocyanat und Hexamethylendiisocyanat und Oleylamin, Octadecylamin und Gemischen aus langkettigen Aminen beschrieben.

Aufgabe der vorliegenden Erfindung war es, Pigmentzubereitungen zu entwickeln, die in Druck- und Lackfarben den Pigmentzubereitungen des Standes der Technik im Fließverhalten, in der Farbstärke und im Glanz überlegen sind.

Es wurde gefunden, daß Pigmentzubereitungen, die

a) ein feinteiliges organisches Pigment und
b) mindestens ein Harnstoffderivat der Formel

$$K-(NH-CO-NH-R)_2 \qquad (I)$$

in der R $C_{12}$- bis $C_{18}$-Alkyl, $C_{12}$- bis $C_{18}$-Alkenyl, $C_8$- bis $C_{18}$-Alkoxypropyl oder

$$-(CH_2)_3-O-(C_2H_4O)_n-R^1,$$

worin $R^1$ für $C_2$- bis $C_8$-Alkyl oder Phenyl und n für 1, 2, 3 oder 4 stehen und K 1,5-Naphthylen oder 4,4'-Diphenylenmethan bedeuten, enthalten,

Druck- und Lackfarben mit hervorragenden coloristischen Eigenschaften ergeben.

So zeigen z. B. Toluoltiefdruckfarben, die mit Pigmentzubereitungen gemäß der Erfindung hergestellt worden sind, ein wesentlich bis deutlich verbessertes Fließverhalten, so daß solche Druckfarben mit erhöhtem Gehalt an Pigment hergestellt werden können bei gleichzeitig ausgezeichnetem Fließverhalten. Weiterhin geben die mit den erfindungsgemäßen Pigmentzubereitungen hergestellten Toluoltiefdruckfarben farbstarke Färbungen mit hohem Glanz. In Einbrennlacken erhält man Färbungen, die höhere Farbstärke bei gleichzeitig wenig bis deutlich reinerem Farbton und höheren Glanz aufweisen als Färbungen, die mit dem gleichen Pigment ohne (b) erhalten werden.

Die erfindungsgemäßen Zubereitungen können durch Mischen des feinteiligen Pigments mit dem Harnstoffderivat der Formel I [=Mittel (b)], z. B. durch Mahlen, erhalten werden. Die Zubereitung kann auch durch Formierung des Rohpigments in Gegenwart der Mittel (b) oder durch gemeinsames Anreiben von Pigment und Mittel (b) in für Druck- und/oder Lackfarben geeigneten Bindemitteln oder Bindemittellösungen hergestellt werden. In allen Fällen erzielt man die gleichen vorteilhaften Wirkungen.

Die Menge an (b) ist von dem Pigment (a) und von (b) abhängig. Die Menge an (b) beträgt in der Regel mindestens etwa 2 Gew.-% bis zu 20 Gew.-%, bezogen auf (a). Vorzugsweise verwendet man 5 bis 15 Gew.-% (b), bezogen auf (a). Besonders bevorzugt sind Mengen an (b) zwischen 7 und 10 Gew.-%, bezogen auf (a), da mit diesen Mengen optimale Effekte erzielt werden.

Man kann (b) auch in Mengen von mehr als 20 Gew.-%, bezogen auf (a), anwenden. Jedoch bringen so große Mengen an (b) keine Vorteile mehr. Vorteilhafterweise wird man den Zusatz an (b) so bemessen, daß ein optimaler Effekt erreicht wird.

Im Falle der Kupferphthalocyanine erzielt man z. B. optimale Effekte mit 7 bis 10 Gew.-% (b), bezogen auf das Pigment.

Bei Pigmentformen, die sich von Flavanthron, Perylen-3,4,9,10-tetracarbonsäure-bis-phenylimiden, wobei der Phenylrest z. B. durch $C_1$- bis $C_4$-Alkyl, Chlor, Brom, Methoxy oder Äthoxy substituiert sein kann, Indanthron und dessen Chlorderivaten, Pyranthron und dessen Chlor- und/oder Bromderivaten und unlöslichen Farbstoffen auf der Basis von Anthrachinon, erzielt man in der Regel mit Mengen zwischen 5 und 15%, bezogen auf das Pigment (a), optimale Ergebnisse.

Als Mittel (b) kommen die Harnstoffderivate der Formel I in Betracht.

K steht für 4,4'-Diphenylenmethyl, vorzugsweise für 1,5-Naphthylen.

Für R sind im einzelnen z. B. zu nennen:

α) $R = C_{12}$- bis $C_{20}$-Alkyl oder Alkenyl: Dodecyl-, Isododecyl, Tridecyl, Tetradecyl, Hexadecyl, Octadecyl, Oleyl-;

β) $R = C_8$- bis $C_{18}$-Alkoxypropyl: 3-(2'-Äthylhexoxy)-propyl, 3-(n-Octoxy)propyl, 3-Nonoxypropyl, 3-Decoxypropyl, 3-Undecoxypropyl, 3-Dodecoxypropyl, 3-Tridecoxypropyl, 3-Tetradecoxypropyl, 3-Pentadecoxypropyl, 3-Hexadecoxypropyl, 3-Octadecoxypropyl;

γ) $R = -(CH_2)_3-O-(C_2H_4O)_n-R^1$, mit $R^1 = C_2-C_8$-Alkyl oder Phenyl und n = 1, 2, 3 oder 4:

$-CH_2-CH_2-CH_2-O-CH_2-CH_2-OR^1$,
$-CH_2-CH_2-CH_2-O-(CH_2-CH_2O)_2-R^1$,
$-CH_2-CH_2-CH_2-O-(CH_2-CH_2O)_3-R^1$ und
$-CH_2-CH_2-CH_2-O-(CH_2-CH_2O)_4-R^1$

mit $R^1$ = Äthyl, n-Propyl, Isopropyl, n-Butyl, Isobutyl, Pentyl, Hexyl, Octyl, 2-Äthylhexyl und Phenyl.

Von den unter γ) genannten Resten für R sind die mit $R^1 = C_2$- bis $C_5$-Alkyl oder Phenyl und n = 1, 2 oder 3 bevorzugt.

Bevorzugt sind Zubereitungen mit Verbindungen der Formel I, in der K für den 1,5-Naphthylrest und R für

α') $C_{13}$- bis $C_{18}$-Alkyl wie Tridecyl, Tetradecyl, Hexadecyl und Octadecyl, Oleyl;

β') 3-($C_8$- bis $C_{18}$-Alkoxy)-propyl, z. B. die vorstehend unter β) im einzelnen genannten und 3-($C_9$-/$C_{11}$-Alkoxy)-propyl, 3-($C_{12}$-/$C_{14}$-Alkoxy)-propyl und 3-($C_{16}$-/$C_{19}$-Alkoxy)-propyl;

γ') $-(CH_2)_3-O-(CH_2-CH_2O)_m-R^2$ mit m = 2 oder 3 und $R^2$ = Äthyl, n-Propyl, n-Butyl oder Phenyl

stehen, da diese Zubereitungen Druckfarben mit besonders vorteilhaften Fließeigenschaften und die damit hergestellten Drucke besonders hohen Glanz aufweisen.

Ganz besonders bevorzugt sind Zubereitungen, die als (b) Verbindungen der Formel I, in der K für den 1,5-Naphthylenrest und R für Tridecyl, 3-(2'-Äthylhexoxy)-propyl oder für

$-(CH_2)_3-O-(C_2H_4O)_2-C_4H_9(n)$

stehen, enthalten.

Als organische Pigmente kommen solche in Betracht, die sich von Anthrachinon und davon abgeleiteten kondensierten Ringsystemen, von der Perylen-3,4,9,10-tetracarbonsäure oder deren Diimid, von Chinophthalonen, Dioxazinen, Chinacridon und von Phthalocyanin ableiten. Im einzelnen sind z. B. zu nennen: Flavanthron, Indanthron und dessen Chlorierungsprodukte mit 1 bis 4 Chloratomen, Pyranthron, Dichlorpyranthron, Monobrom- und Dibrom-dichlorpyranthron, Tetrabrompyranthron, Perylen-3,4,9,10-tetracarbonsäurediimide, wobei die Imidgruppen unsubstituiert, durch

$C_1$- bis $C_3$-Alkyl oder durch phenylische oder heterocyclische Reste substituiert und worin die phenylischen und heterocyclischen Reste noch durch nicht wasserlöslichmachende Substituenten substituiert sein können, Anthrapyrimidincarbonsäureamide, Violanthron, Isoviolanthron, Dioxazinpigmente, Kupferphthalocyanine, die bis zu 2 Chlor im Molekül enthalten können, Polychlorkupferphthalocyanine und Polybromchlorkupferphthalocyanine mit bis zu 14 Bromatomen.

Ein Teil der Verbindungen der Formel I stabilisiert α-Kupferphthalocyanine gegen Modifikationsumwandlung und schützt Kupferphthalocyaninpigmente in aromatische Kohlenwasserstoffe enthaltenden Systemen gegen weiteres Kristallisieren (sog. Überkristallisieren). Daher können mit solchen Zubereitungen auch z. B. α-Kupferphthalocyaninpigmente enthaltende Lacke hergestellt werden, die sonst nicht stabil sind, da das α-Kupferphthalocyanin zu langen Nadeln der β-Modifikation rekristallisiert (sog. Umfallen der Modifikation).

Für diesen Zweck sind vor allem Zubereitungen geeignet, die als (b) Verbindungen der Formel

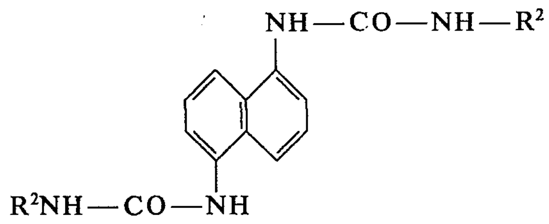

enthalten, in der $R^2$ $C_8$- bis $C_{10}$-, $C_{13}$- bis $C_{18}$-Alkyl oder 3-($C_8$- bis $C_{18}$-Alkoxy)-propyl ist.

Für diese Stabilisierung werden vorzugsweise als Verbindungen (b) solche der Formel II verwendet, in der $R^2$ für 2-Äthylhexyl, n-Octyl, Decyl, Tridecyl, Tetradecyl, Hexadecyl, Octadecyl, 3-(2'-Äthylhexoxy)-propyl, 3-Octoxy-propyl, 3-Decoxypropyl, 3-Tridecoxypropyl, 3-Hexadecoxypropyl oder 3-Octadecoxypropyl steht.

So wird z. B. in einer Zubereitung, die α-Kupferphthalocyanin und die Verbindung der Formel II mit $R^2$=2-Äthylhexyl enthält, das α-Kupferphthalocyanin durch 2stündiges Kochen in Toluol nicht in die β-Modifikation umgewandelt.

Die Zubereitungen gemäß der vorliegenden Erfindung können neben (a) und (b) gegebenenfalls noch weitere in Pigmentzubereitungen übliche Mittel (c), wie Benetzungsmittel, entstaubend wirkende Mittel u. a. enthalten. Die Menge an solchen Mitteln wird so gering wie möglich bemessen und sollte 5 Gew.-%, bezogen auf die Zubereitung (a+b), nicht überschreiten. Vorzugsweise liegt der Anteil an (c), bezogen auf (a+b), unterhalb von 1 Gew.-%, insbesondere unterhalb von 0,2 Gew.-%.

Die vorliegende Erfindung soll durch die folgenden Beispiele weiter erläutert werden. Die Prozentangaben beziehen sich auf das Gewicht.

Zur Prüfung der Zubereitungen wurden Druckfarben und Einbrennlacke hergestellt:

## A) Toluoltiefdruckfarbe

A1) In einem 250-ml-Becher (Polyäthylen) wird die 12 g Pigment entsprechende Menge der Zubereitung zu 138 g einer 35%igen Lösung eines Druckfarbenbindemittels auf der Basis Phenol-Formaldehyd-Kondensationsprodukte gegeben und nach der Zugabe von 300 g Glaskugeln (3 bis 4 mm ∅) auf einer Schüttelmühle (®RED DEVIL) 5 Minuten geschüttelt (Farbe 1).

A2) Es wird wie bei A1) verfahren, jedoch wird der Ansatz 30 Minuten geschüttelt (Farbe 3).

A3) (Vergleich) Es wird wie bei A1) verfahren, jedoch werden 12 g des in der Zubereitung enthaltenen Pigments [d. h. ohne (b)] verwendet (Farbe 2).

A4) (Vergleich) Es wird wie bei A3) verfahren, jedoch wird der Ansatz 30 Minuten geschüttelt (Farbe 4).

Die Toluoltiefdruckfarben wurden wie folgt geprüft:

## B) Prüfung der Toluoltiefdruckfarben A)

B1) Viskosität: Die Viskosität wurde durch Messung der Auslaufzeit aus einem DIN-4-Becher bestimmt.

B2) Glanz: Der Glanz wurde an Färbungen mit Hilfe des Glanzmeßgerätes der Fa. Gardner gegen einen Schwarzglasstandard bei einem Winkel von 45° gemessen.
Die Färbungen wurden durch Auftrag der nach A) erhaltenen Tiefdruckfarben auf Aluminiumfolie und Polyäthylenfolie erhalten. Der Farbauftrag erfolgte mit einer 20-µm-Spiralrakel der Fa. Erichson.

C) Einbrennlack

C1) Buntlack: In einem 250-ml-Becher (Polyäthylen) wird die 5 g Pigment entsprechende Menge der Zubereitung zu 95 g eines Einbrennlackes auf der Basis Alkyd-Melaminharz (35%ige Lösung in Xylol) gegeben und nach Zufügen von 100 ml Glaskugeln (3 mm ∅) auf einer Schüttelmühle (®RED DEVIL) 60 Minuten geschüttelt.
C2) Volltonlack: 5 g Buntlack C1) werden mit der gleichen Menge eines Klarlackes auf der Basis Alkyd-Melaminharz (35%ige Lösung in Xylol) gemischt.
C3) Weißverschnitt: 4 g Buntlack C1) werden mit 12,5 g Weißlack (40%ig an Titandioxid) gemischt.

D) Prüfung des Volltonlackes und des Weißverschnitts

D1) Der Volltonlack C2) wird auf einem Kontrastkarton mit einer 150-µm-Spiralrakel abgezogen. Nach dem Ablüften (20 Minuten) wird die Färbung bei 120° C eingebrannt (15 Minuten).
Die Lackierung wird über dem schwarz-weißen Kontraststreifen oder -raster visuell nach Glanz, Helligkeit und Lasur im Vergleich zu entsprechenden Färbungen, die das Pigment ohne den Zusatz (b) enthalten, beurteilt.
D2) Der Weißverschnitt C3) wird mit einer 150-µm-Rakel auf Karton abgezogen und die Lackierung nach dem Ablüften (20 Minuten) bei 120°C eingebrannt (30 Minuten). Die Färbungen wurden farbmetrisch nach dem FIAF-Programm (L. Gall, Farbe+Lack, 75 [1969], Seiten 854 bis 862) hinsichtlich Farbstärke, Farbton (T) und Reinheit (S) ausgewertet. Die Farbstärke wurde als Färbeäquivalent (FÄ) auf die Vergleichsfärbung=100 [die das Pigment ohne das Mittel (b) enthält] bezogen.
D3) Bestimmung der Dispergierhärte (Weißverschnitt): Die Dispergierhärte wird mit Hilfe von 2 Weißverschnittfärbungen bestimmt. Die eine wird mit dem nach C1) erhaltenen Buntlack hergestellt. Die mit diesem Weißverschnitt erhaltene Färbung hat die Endfarbstärke (F2).
Der andere Weißverschnitt wird mit einem Buntlack hergestellt, der analog C1) hergestellt, jedoch nur 6 Minuten in der Schüttelmühle dispergiert wird. Der damit erhaltene Weißverschnitt hat die Farbstärke F1.
Die Dispergierhärte (DH) errechnet sich aus den Farbstärken F1 und F2 nach

$$DH = \left(\frac{F2}{F1} - 1\right) \cdot 100.$$

Aus der Gleichung ergibt sich, daß DH um so kleiner wird, je leichter ein Pigment in dem betreffenden Medium dispergierbar ist und umgekehrt.

Beispiel 1

a) Zubereitung: 100 g des nach c) hergestellten Flavanthronpigments werden mit 9 g des Umsetzungsproduktes von 1,5-Naphthylendiisocyanat und 3-(2′-Äthylhexoxy)-propylamin (1 : 2 Mol) homogen gemischt (durch Mahlen in einer Kaffeemühle).
b) Toluoltiefdruckfarbe: Aus a) wird nach A1) und A2) je eine Toluoltiefdruckfarbe hergestellt (Farben 1 und 3).
Zum Vergleich wird mit dem nach c) erhaltenen Pigment entsprechend A3) und A4) eine Toluoltiefdruckfarbe hergestellt (Farben 2 und 4).
Die Prüfung der Toluoltiefdruckfarben erfolgte nach B). Die Ergebnisse sind in der folgenden Tabelle 1 zusammengefaßt.

| | Farbe 1 | Farbe 2 | Farbe 3 | Farbe 4 |
|---|---|---|---|---|
| Viskosität [sec] | 24 | 32 | 26 | 99 |
| Glanz | | | | |
| Alufolie | 148 | 135 | 159 | 120 |
| Polyäthylenfolie (PE) | 85 | 81 | 104 | 91 |

Praktisch das gleiche Ergebnis erhält man, wenn man bei b) so verfährt, daß man in die Bindemittellösung 12 g des nach c) hergestellten Flavanthronpigments und 1,1 g des genannten Umsetzungsproduktes zur Bindemittellösung gibt und gemeinsam in der Schüttelmühle dispergiert.

c) Herstellung des verwendeten Pigments: In einer 10 $m^3$-Kugelmühle (Füllung 15,5 t Eisenkugeln mit 20 bis 25 mm ∅) wird eine Mischung aus 250 kg rohem Flavanthron, 1500 kg Natriumchlorid und 5 kg Trichlorbenzol bei 90° C 30 Stunden lang gemahlen. Das Mahlgut wird in Wasser eingetragen, die warme Suspension filtriert, das Filtergut salzfrei gewaschen und getrocknet.

Beispiel 2

a) Die Zubereitung wird im Bindemittel hergestellt.

b) Toluoltiefdruckfarbe: Es wird je eine Farbe nach A1) und A2) hergestellt, jedoch werden der Bindemittellösung 12 g des nach c) erhaltenen Mahlgutes und 1,1 g des Umsetzungsproduktes von 1 Mol 1,5-Naphthylendiisocyanat und 2 Mol 3-(2'-Äthylhexoxy)-propylamin zugegeben und dann dispergiert (Farben 1 und 3).

Die Vergleichsfarben werden nach A3) und A4) mit dem nach c) erhaltenen Mahlgut hergestellt (Farben 2 und 4).

Die Prüfung der Toluoltiefdruckfarben erfolgte nach B). Die Ergebnisse sind in der Tabelle 2 zusammengestellt.

| | Farbe | | | |
|---|---|---|---|---|
| | 1 | 2 (Vgl.) | 3 | 4 (Vgl.) |
| | Viskosität [sec] | | | |
| | 24 | 26 | 28 | 98 |
| Glanz | | | | |
| Alufolie | 111 | 85 | 170 | 122 |
| PE-Folie | 70 | 54 | 111 | 83 |

Ein ebenso gutes Ergebnis bei b) erhält man, wenn man aus dem Mahlgut c) und dem in b) angegebenen Bisharnstoff durch Mischen eine homogene Zubereitung herstellt [vgl. Beispiel 1 a)], die 9%, bezogen auf Mahlgut, an dem Bisharnstoff enthält, und daraus nach A1) und A2) Toluoltiefdruckfarben herstellt.

c) Verwendetes Pigment: In einer 2 $m^3$-Kugelmühle (Füllung: 3 t Eisenkugeln mit 20 bis 25 mm ∅) werden 300 kg rohres Flavanthron 25 Stunden gemahlen. Das Mahlgut wird direkt verwendet.

Beispiel 3

a) Zubereitung: 100 g des nach c) erhaltenen Mahlgutes werden mit 7,5 g des in Beispiel 1 a) angegebenen Umsetzungsproduktes in einer Kaffeemühle homogenisiert.

b) Die Toluoltiefdruckfarbe wird nach A1) und A2) mit a) und die Vergleichsfarben A3) und A4) mit dem Mahlgut c) hergestellt.

Die Prüfung der Farben erfolgt nach B). Die Ergebnisse sind in der Tabelle 3 zusammengestellt.

Gleich gute Toluoltiefdruckfarben erhält man, wenn man die Farben analog Beispiel 2 b) herstellt, wobei der Zusatz an dem Bisharnstoff 7,5%, bezogen auf das Mahlgut c), beträgt.

c) Verwendetes Pigment: In einer 2 $m^3$-Kugelmühle (Füllung: 3 t Eisenkugeln von 20 bis 25 mm ∅) werden 300 kg rohes Indanthron 30 Stunden gemahlen. Das Mahlgut wird dann aus der Mühle entleert und als solches verwendet.

Beispiel 4

b) Toluoltiefdruckfarben: Es wird je eine Farbe nach A1) und A2) hergestellt, jedoch werden der Bindemittellösung 12 g des nach c) erhaltenen Mahlgutes und 0,96 g des Umsetzungsproduktes aus 1,5-Naphthylendiisocyanat und 3-(2'-Äthylhexoxy)-propylamin (1 : 2 Mol) zugegeben und

diese Mischung dann dispergiert (Farben 1 und 3).
Die Vergleichsfarben werden nach A3) und A4) mit dem Mahlgut c) hergestellt (Farben 2 und 4).
Die Prüfung der Farben erfolgte gemäß B). Die Ergebnisse sind in der Tabelle 3 unter Beispiel 4 zusammengestellt.
Praktisch das gleiche Ergebnis erzielt man, wenn man aus c) und dem bei b) angegebenen Umsetzungsprodukt vorher eine homogene Mischung herstellt und diese zur Herstellung der Druckfarbe verwendet.

c) In einer 2 $m^3$-Kugelmühle (Füllung: 3 t Eisenkugeln von 20 bis 25 mm ∅) werden 200 kg rohes Perylen-3,4,9,10-tetracarbonsäure-bis-N,N'-(4'-äthoxyphenylimid) 35 Stunden gemahlen. Das Mahlgut wird als solches direkt verwendet.

Beispiel 5

a) Zubereitung: 100 g Pigment Yellow 108, C.I. Nr. 68 420, erhalten nach c), werden mit 8,5 g des Umsetzungsproduktes aus 1,5-Naphthylendiisocyanat und 3-(2'-Äthylhexoxy)-propylamin (1 : 2 Mol) homogen vermischt.

b) Mit der Zubereitung aus a) werden nach A1) und A2) Toluoltiefdruckfarben hergestellt (Farben 1 und 3). Aus dem Mahlgut c) werden nach A3) und A4) die Vergleichsfarben hergestellt (Farben 2 und 4).
Die Prüfung der Farben erfolgte gemäß B). Die Ergebnisse sind in der Tabelle 3 unter Beispiel 5 zusammengestellt.
Man erhält ein gleich gutes Ergebnis, wenn man die Druckfarbe analog Beispiel 4 b) herstellt.

c) In einer 2 $m^3$-Kugelmühle (Füllung: 3 t Eisenkugeln von 20 bis 25 mm ∅) werden 300 kg rohes Pigment Yellow 108, C.I. Nr. 68 420, 24 Stunden gemahlen. Das Mahlgut wird als solches verwendet.

Tabelle 3

Prüfungsergebnisse der Toluoltiefdruckfarben

| Beispiel | Farbe | Viskosität [sec] | Glanz PE-°) folie | Glanz Aluminiumfolie |
|---|---|---|---|---|
| 3 | 1 | 22 | 48 | 56 |
| | 2+) | 27 | 35 | 40 |
| | 3 | 33 | 78 | 78 |
| | 4+) | 38 | 59 | 55 |
| 4 | 1 | 27 | 66 | 111 |
| | 2+) | 34 | 61 | 98 |
| | 3 | 41 | 93 | 130 |
| | 4+) | 61 | 85 | 112 |
| 5 | 1 | 20 | 52 | 112 |
| | 2+) | 21 | 48 | 103 |
| | 3 | 27 | 91 | 162 |
| | 4+) | 46 | 81 | 150 |
| 6 | 1 | 22 | 89 | 133 |
| | 2+) | 26 | 57 | 85 |
| | 3 | 26 | 105 | 158 |
| | 4+) | 37 | 79 | 113 |

+) Vergleich.
°) PE = Polyäthylen.

**Beispiel 6**

a) **Pigmentzubereitung: In einer 50-l-Kugelmühle (Füllung: 50 kg Eisenkugeln von 20 bis 30 mm ∅) werden 5 kg rohes Kupferphthalocyanin (hergestellt aus o-Phthalodinitril und Kupfer-I-chlorid in Nitrobenzol) und 0,45 kg des Umsetzungsproduktes von 1,5-Naphthylendiisocyanat und 3-(2′-Äthylhexoxy)-propylamin 25 Stunden gemahlen.**

b) **Die Toluoltiefdruckfarben werden mit der Zubereitung a) nach A1) und A2) hergestellt (Farben 1 und 3). Zum Vergleich wurden Toluoltiefdruckfarben nach A3) und A4) hergestellt (Farben 2 und 4), bei denen als Pigment in Abwesenheit des Diisocyanatumsetzungsproduktes gemahlenes rohes Kupferphthalocyanin verwendet wird.
Die Prüfung der Farben erfolgt nach B). Die Ergebnisse sind in der Tabelle 3 unter Beispiel 6 zusammengestellt.**

Beispiel 7

a) Pigmentzubereitung: 100 g des nach c) hergestellten Mahlgutes und X g der Verbindung

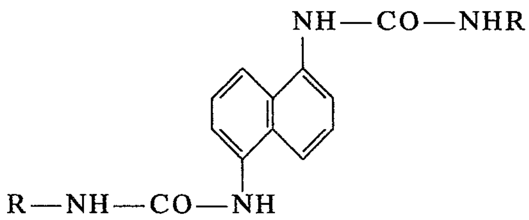

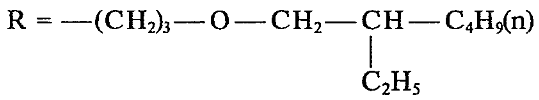

(=Bisharnstoff) werden in eine Mischung aus 400 g Tetrahydrofuran und 300 g 10%iger Kochsalzlösung 5 Stunden auf Siedetemperatur erhitzt. Das Tetrahydrofuran wird dann abdestilliert, die wäßrige Suspension filtriert, das Filtergut salzfrei gewaschen und getrocknet.

b) Mit der Zubereitung a) werden nach A1) und A2) Toluoltiefdruckfarben 1 und 3 hergestellt. Zum Vergleich werden nach A3) und A4) Tiefdruckfarben mit einem Kupferphthalocyaninpigment hergestellt (Farben 2 und 4), das nach a), jedoch in Abwesenheit des Bisharnstoffes formiert worden ist. Die Prüfung der Druckfarben erfolgte nach B). Die Ergebnisse sind in der Tabelle 4 zusammengefaßt.

c) In einer Kugelmühle (Volumen 50 l; Füllung: 50 kg Eisenkugeln von 20 bis 30 mm ∅) werden 5 kg rohes Kupferphthalocyanin (hergestellt aus o-Phthalodinitril und Kupfer-I-chlorid nach dem Lösungsmittelverfahren) 25 Stunden gemahlen.

Beispiele 8 bis 10

Es wird wie im Beispiel 7 angegeben verfahren, jedoch verwendet man die in der Tabelle 4 genannten Bisharnstoffe in der angegebenen Menge X. Die Prüfungsergebnisse sind in der Tabelle 4 zusammengefaßt.

Tabelle 4

| Bsp. | Bisharnstoff X [g] | R 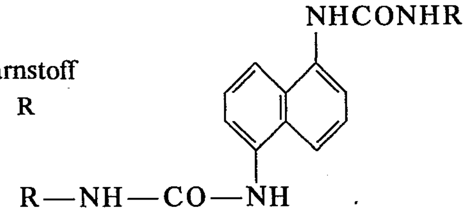 | Prüfungsergebnisse der Toluoltiefdruckfarben Farbe | Viskosität [sec] | Glanz PE-folie | Aluminiumfolie |
|---|---|---|---|---|---|---|
| 7 | 5 | $-(CH_2)_3-O-CH_2-CH-C_4H_9(n)$ | 1 | 23 | 93 | 144 |
| | | $C_2H_5$ | 2*) | 28 | 81 | 117 |
| | | | 3 | 30 | 104 | 161 |
| | | | 4*) | 71 | 98 | 140 |
| 8 | 7,5 | $-(CH_2)_3-O-C_{13}H_{27}$ | 1 | 18 | 102 | 157 |
| | | | 2*) | 28 | 81 | 117 |
| | | | 3 | 19 | 111 | 176 |
| | | | 4*) | 71 | 97 | 140 |
| 9 | 7 | $-(CH_2)_3-O-(C_2H_4O)_2-C_4H_9(n)$ | 1 | 22 | 109 | 141 |
| | | | 2*) | 28 | 81 | 117 |
| | | | 3 | 26 | 112 | 161 |
| | | | 4*) | 71 | 98 | 140 |
| 10 | 9 | $-C_{13}H_{27}$ | 1 | 18 | 95 | 133 |
| | | | 2*) | 28 | 81 | 117 |
| | | | 3 | 20 | 108 | 160 |
| | | | 4*) | 71 | 98 | 140 |

*) Vergleich (ohne Zusatz)

## Beispiel 11

a) Pigmentzubereitung: 100 g Kupferphthalocyaninpigment [Herstellung vgl. c)] werden mit X g des in der Tabelle 5 angegebenen Bisharnstoffes in einer Kaffeemühle gemahlen (homogenisiert).

b) Mit der Zubereitung a) werden wie unter A1) und A2) angegeben Toluoltiefdruckfarben hergestellt (Farben 1 und 3).
Die Vergleichsfarben werden mit dem nach c) erhaltenen Pigment entsprechend A3) und A4) hergestellt (Farben 2 und 4).
Die Prüfung der Druckfarben erfolgte entsprechend den Angaben unter B).
Die Ergebnisse sind in der Tabelle 5 zusammengefaßt.

c) Das Pigment wurde wie folgt hergestellt: Nach dem Lösungsmittelverfahren aus o-Phthalodinitril und Kupfer-I-chlorid hergestelltes Kupferphthalocyanin wird mit der 10fachen Gewichtsmenge Steinsalz unter Zusatz von 2%, bezogen auf Kupferphthalocyanin, an Trichlorbenzol 25 Stunden in einer Kugelmühle gemahlen. Das Mahlgut wird in Wasser eingetragen, die Pigmentsuspension warm filtriert, das Filtergut salzfrei gewaschen und getrocknet.

## Beispiele 12 bis 15

Man verfährt wie im Beispiel 11, verwendet jedoch die in der Tabelle 5 genannten Bisharnstoffe in der für X angegebenen Menge. Die Prüfungsergebnisse der erhaltenen Toluoltiefdruckfarben sind in der Tabelle 5 zusammengestellt.

Vergleichsbeispiele I bis V

a) Pigmentzubereitung I: 100 g Kupferphthalocyaninpigment [hergéstellt nach Beispiel 11 c)] und 9 g des in der DE-A-2 701 292, Beispiel A, beschriebenen Umsetzungsproduktes aus 2-Aminopyridin, Äthylenglykol und einer Mischung aus 2,6-/2,4-Tolylen-diisocyanat werden homogen gemischt durch Mahlen in einer Kaffeemühle.
Pigmentzubereitung II: Wird wie die Zubereitung I hergestellt, jedoch werden 9 g des in der DE-A-2 701 292, Beispiel B, beschriebenen Umsetzungsproduktes aus 2-Aminopyridin, Äthylendiamin und 2,4-/2,6-Tolylendiisocyanat als Zusatz verwendet.
Pigmentzubereitung III: Wird wie die Zubereitung I hergestellt, jedoch werden 9 g des in der DE-A-2 701 292, Beispiel D, beschriebenen Umsetzungsproduktes aus 2-Aminobenzimidazol, Äthylenglykol und 2,4-/2,6-Tolylendiisocyanatgemisch verwendet.
Pigmentzubereitung IV: Wird wie die Zubereitung I hergestellt, jedoch werden 9 g des in der DE-B-1 767 822, Beispiel 1, beschriebenen Kondensates aus Äthylendiamin, 3-Dimethylaminopropylamin und Tolylendiisocyanat verwendet.
Pigmentzubereitung V: Wird wie die Zubereitung I hergestellt, jedoch werden 9 g des in der DE-B-1 767 822, Beispiel 10, beschriebenen Umsetzungsproduktes aus 3-Dimethylaminopropylamin und Phenylisocyanat verwendet.

b) Toluoltiefdruckfarben: Mit den Pigmentzubereitungen I bis V werden nach A1) und A2) Tiefdruckfarben hergestellt (Farben 1 und 3). Die Vergleichsfarben werden mit dem nach Beispiel 11 c) erhaltenen Kupferphthalocyaninpigment hergestellt (Farben 2 und 4).
Die Druckfarben wurden nach B) geprüft. Die Prüfergebnisse sind in der Tabelle 5 unter Beispiele I bis V zusammengestellt.

Tabelle 5

| Bsp. | Bisharnstoff<br>X<br>[g] | R<br>NHCONHR<br>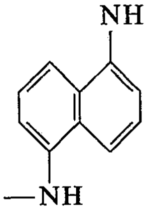<br>R—NH—CO—NH | Prüfungsergebnisse der Toluoltiefdruckfarben<br>Farbe | Viskosität<br>[sec] | Glanz<br>PE-folie | Aluminium-folie |
|---|---|---|---|---|---|---|
| 11 | 8 | $-(CH_2)_3-O-CH_2-CH(C_2H_5)-C_4H_9(n)$ | 1 | 18 | 69 | 107 |
| | | | 2*) | 20 | 50 | 81 |
| | | | 3 | 20 | 102 | 135 |
| | | | 4*) | 54 | 76 | 113 |
| 12 | 9 | $-(CH_2)_3-O-C_{13}H_{27}$ | 1 | 18 | 82 | 115 |
| | | | 2*) | 20 | 50 | 81 |
| | | | 3 | 21 | 104 | 156 |
| | | | 4*) | 54 | 76 | 113 |
| 13 | 8,5 | $-(CH_2)_3-O-(C_2H_4O)_2-C_4H_9(n)$ | 1 | 19 | 95 | 133 |
| | | | 2*) | 21 | 50 | 81 |
| | | | 3 | 22 | 108 | 171 |
| | | | 4*) | 54 | 76 | 113 |
| 14 | 9 | $-C_{13}H_{27}$ | 1 | 18 | 59 | 89 |
| | | | 2*) | 21 | 50 | 81 |
| | | | 3 | 20 | 96 | 145 |
| | | | 4*) | 54 | 75 | 113 |

Fortsetzung

| Bsp. | Bisharnstoff X [g] | R 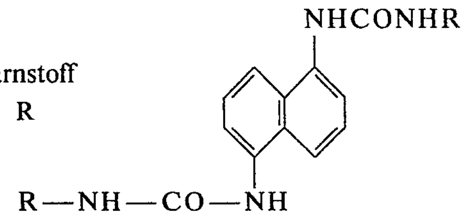 | Prüfungsergebnisse der Toluoltiefdruckfarben Farbe | Viskosität [sec] | Glanz PE-folie | Aluminium-folie |
|---|---|---|---|---|---|---|
| 15 | 9 | $-C_{18}H_{35}$ (Oleyl) | 1 | 19 | 68 | 91 |
| | | | 2*) | 19 | 69 | 85 |
| | | | 3 | 22 | 100 | 141 |
| | | | 4*) | 83 | 83 | 107 |
| I (Stand der Technik) | 9 | DE-A-2 701 292, Bsp. A | 1 | 24 | 44 | 61 |
| | | | 2*) | 20 | 52 | 76 |
| | | | 3 | 101 | 72 | 100 |
| | | | 4*) | 48 | 80 | 113 |
| II | 9 | DE-A-2 701 292, Bsp. B | 1 | 24 | 48 | 68 |
| | | | 2*) | 20 | 52 | 76 |
| | | | 3 | 73 | 76 | 100 |
| | | | 4*) | 48 | 80 | 113 |
| III | 9 | DE-A-2 701 292, Bsp. D | 1 | 20 | 46 | 65 |
| | | | 2*) | 20 | 52 | 76 |
| | | | 3 | 48 | 70 | 98 |
| | | | 4*) | 48 | 80 | 113 |
| IV | 9 | DE-B-1 667 822, Bsp. 1 | 1 | 24 | 46 | 65 |
| | | | 2*) | 19 | 55 | 78 |
| | | | 3 | 60 | 68 | 88 |
| | | | 4*) | 32 | 78 | 120 |
| V | 9 | DE-B-1 667 822, Bsp. 10 | 1 | 28 | 57 | 80 |
| | | | 2*) | 19 | 55 | 78 |
| | | | 3 | 68 | 83 | 122 |
| | | | 4*) | 32 | 78 | 120 |

*) Vergleich (ohne Zusatz).

Beispiel 16

a) Die Pigmentzubereitung wird im Druckverfahrenbindemittel direkt bei der Herstellung der Farbe hergestellt.

b) Die Toluoltiefdruckfarben werden nach A1) und A2) hergestellt, jedoch werden 12 g des nach Beispiel 11 c) erhaltenen Pigments und X g des in der Tabelle 6 angegebenen Bisharnstoffes in das Druckfarbenbindemittel eingearbeitet (Farben 1 und 3).
Die Vergleichsfarben 2 und 4 werden nach A3) und A4) mit dem Pigment aus Beispiel 11 c) hergestellt. Die Prüfung der Toluoltiefdruckfarben erfolgte entsprechend B). Die Ergebnisse sind in der Tabelle 6 zusammengestellt.

Beispiele 17 bis 33

Verwendet man anstelle des in Beispiel 16 angegebenen Bisharnstoffes andere in den folgenden Tabellen 6 und 7 angegebenen Bisharnstoffe, so erhält man Druckfarben, welche die in der Tabelle 6 angegebenen Eigenschaften aufweisen.

Tabelle 6

| Bsp. | Bisharnstoff X [g] | R 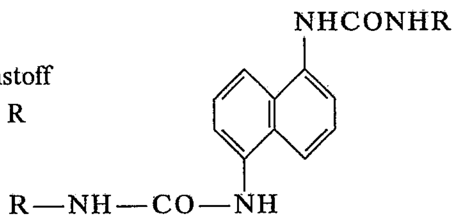 | Prüfungsergebnisse der Toluoltiefdruckfarben Farbe | Viskosität [sec] | Glanz PE-folie | Aluminium-folie |
|---|---|---|---|---|---|---|
| 16 | 0,96 | $-(CH_2)_3-O-CH_2-CH-C_4H_9(n)$ | 1 | 16 | 89 | 129 |
| | (≙8%) | $C_2H_5$ | 2*) | 18 | 46 | 74 |
| | | | 3 | 20 | 104 | 152 |
| | | | 4*) | 37 | 69 | 102 |
| 17 | 1,02 | $-(CH_2)_3-O-C_{13}H_{27}$ | 1 | 19 | 102 | 147 |
| | (≙8,5%) | | 2*) | 20 | 46 | 74 |
| | | | 3 | 24 | 161 | 157 |
| | | | 4*) | 37 | 69 | 102 |
| 18 | 1,08 | $-(CH_2)_3-O-(C_2H_4O)_2-C_4H_9(n)$ | 1 | 20 | 52 | 68 |
| | (≙9%) | | 2*) | 21 | 46 | 65 |
| | | | 3 | 22 | 107 | 121 |
| | | | 4*) | 63 | 74 | 100 |
| 19 | 0,96 | $-C_{13}H_{27}$ | 1 | 19 | 79 | 104 |
| | | | 2*) | 24 | 67 | 92 |
| | | | 3 | 24 | 104 | 135 |
| | | | 4*) | 65 | 85 | 100 |
| 20 | 1,08 | $-C_{18}H_{35}$ (Oleyl) | 1 | 18 | 70 | 94 |
| | | | 2*) | 19 | 59 | 85 |
| | | | 3 | 23 | 106 | 144 |
| | | | 4*) | 53 | 83 | 107 |
| 21 | 1,02 | $-(CH_2)_3-O-C_{9-11}H_{19-23}$ | 1 | 15 | 65 | 96 |
| | | (Gemisch) | 2*) | 19 | 46 | 61 |
| | | | 3 | 19 | 102 | 155 |
| | | | 4*) | 37 | 69 | 94 |
| 22 | 1,02 | $-(CH_2)_3-O-C_{10}H_{21}$ | 1 | 16 | 80 | 120 |
| | | | 2*) | 19 | 46 | 61 |
| | | | 3 | 22 | 106 | 150 |
| | | | 4*) | 37 | 69 | 94 |

Fortsetzung

| Bsp. | Bisharnstoff X [g] | R 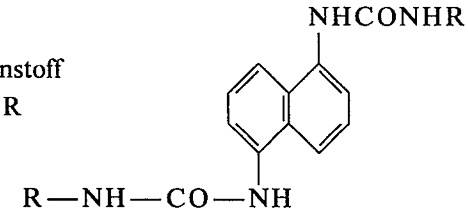 | Prüfungsergebnisse der Toluoltiefdruckfarben Farbe | Viskosität [sec] | Glanz PE-folie | Aluminium-folie |
|---|---|---|---|---|---|---|
| 23 | 1,08 | $—(CH_2)_3—O—C_{12-14}H_{25-29}$ (Gemisch) | 1 | 15 | 48 | 67 |
| | | | 2*) | 19 | 46 | 61 |
| | | | 3 | 19 | 100 | 156 |
| | | | 4*) | 37 | 69 | 94 |
| 24 | 1,02 | $—(CH_2)_3—O—C_{16-19}H_{33-39}$ (Gemisch) | 1 | 14 | 54 | 94 |
| | | | 2*) | 19 | 46 | 61 |
| | | | 3 | 19 | 109 | 142 |
| | | | 4*) | 37 | 69 | 94 |
| 25 | 0,96 | $—(CH_2)_3—O—C_{18}H_{37}$ | 1 | 21 | 86 | 98 |
| | | | 2*) | 19 | 46 | 61 |
| | | | 3 | 28 | 102 | 130 |
| | | | 4*) | 37 | 69 | 94 |
| 26 | 1,02 | $-(CH_2)_3-O-CH_2-CH_2-O-C_4H_9(n)$ | 1 | 19 | 52 | 68 |
| | | | 2*) | 19 | 46 | 65 |
| | | | 3 | 22 | 107 | 121 |
| | | | 4*) | 63 | 74 | 99 |
| 27 | 1,02 | $—(CH_2)_3—O—(C_2H_4O)_2—C_2H_5$ | 1 | 17 | 48 | 70 |
| | | | 2*) | 19 | 46 | 65 |
| | | | 3 | 22 | 102 | 130 |
| | | | 4*) | 63 | 74 | 99 |
| 28 | 1,02 | $—(CH_2)_3—O—(C_2H_4O)_2—C_6H_5$ | 1 | 18 | 48 | 85 |
| | | | 2*) | 19 | 46 | 65 |
| | | | 3 | 26 | 93 | 133 |
| | | | 4*) | 63 | 74 | 99 |
| 29 | 1,08 | $—(CH_2)_3—O—(C_2H_4O)_3—C_4H_9(n)$ | 1 | 21 | 104 | 150 |
| | | | 2*) | 20 | 55 | 87 |
| | | | 3 | 25 | 107 | 155 |
| | | | 4*) | 37 | 87 | 119 |
| VI | 1,08 | DE-B-2 701 292, Bsp. A | 1 | 39 | 52 | 78 |
| | | | 2*) | 36 | 50 | 69 |
| | | | 3 | 203 | 74 | 98 |
| | | | 4*) | 180 | 80 | 106 |
| VII | 1,08 | DE-B-2 701 292, Bsp. B | 1 | 50 | 50 | 76 |
| | | | 2*) | 36 | 50 | 69 |
| | | | 3 | 146 | 63 | 83 |
| | | | 4*) | 180 | 80 | 106 |

Fortsetzung

| Bsp. | Bisharnstoff X [g] | R 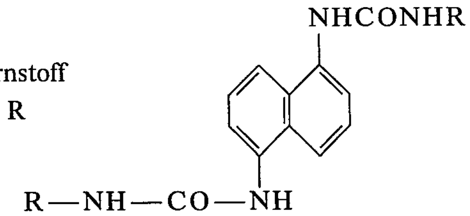 | Prüfungsergebnisse der Toluoltiefdruckfarben Farbe | Viskosität [sec] | Glanz PE-folie | Aluminium-folie |
|---|---|---|---|---|---|---|
| VIII | 1,08 | DE-A-2 701 292, Bsp. D | 1 | 36 | 48 | 74 |
| | | | 2*) | 36 | 50 | 69 |
| | | | 3 | 127 | 65 | 89 |
| | | | 4*) | 180 | 80 | 106 |
| IX | 1,08 | DE-B-1 767 822, Bsp. 1 | 1 | 40 | 41 | 72 |
| | | | 2*) | 36 | 50 | 69 |
| | | | 3 | 181 | 54 | 91 |
| | | | 4*) | 180 | 80 | 106 |
| X | 1,08 | DE-B-1 767 822, Bsp. 10 | 1 | 70 | 59 | 93 |
| | | | 2*) | 36 | 50 | 69 |
| | | | 3 | 235 | 70 | 102 |
| | | | 4*) | 180 | 80 | 106 |

*) Vergleich (ohne Zusatz).

Tabelle 7

| Bsp. | Bisharnstoff X [g] | R 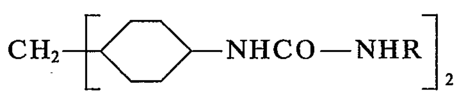 | Prüfungsergebnisse der Toluoltiefdruckfarben Farbe | Viskosität [sec] | Glanz PE-folie | Aluminium-folie |
|---|---|---|---|---|---|---|
| 30 | 1,02 | $-C_{13}H_{27}$ | 1 | 18 | 63 | 70 |
| | (≙8,5%) | | 2*) | 18 | 52 | 74 |
| | | | 3 | 20 | 89 | 131 |
| | | | 4*) | 31 | 78 | 117 |
| 31 | 1,08 | $-(CH_2)_3-O-CH_2-CH-C_4H_9(n)$ | 1 | 17 | 57 | 80 |
| | (≙9%) | $C_2H_5$ (an CH) | 2*) | 18 | 52 | 74 |
| | | | 3 | 21 | 89 | 115 |
| | | | 4*) | 31 | 78 | 117 |
| 32 | 0,96 | $-(CH_2)_3-O-C_{13}H_{27}$ | 1 | 16 | 107 | 154 |
| | (≙8%) | | 2*) | 20 | 46 | 85 |
| | | | 3 | 45 | 109 | 165 |
| | | | 4*) | 80 | 72 | 99 |
| 33 | 0,96 | $-(CH_2)_3-O-(C_2H_4O)_2-C_4H_9(n)$ | 1 | 17 | 52 | 78 |
| | | | 2*) | 18 | 50 | 71 |
| | | | 3 | 20 | 83 | 120 |
| | | | 4*) | 31 | 72 | 112 |

*) Vergleich.

Vergleichsbeispiele VI bis X

b) Die Pigmentzubereitungen werden durch Einarbeiten von 12 g Kupferphthalocyaninpigment [hergestellt nach Beispiel 11 c)] und X g der in der DE-A-2 701 292, Beispiele A, B und D, und der DE-B-1 767 822, Beispiele 1 und 10, beschriebenen Umsetzungsprodukte direkt im Druckfarbenbindemittel bei der Herstellung der Druckfarben nach A1) und A2) hergestellt (jeweils Farben 1 und 3).

| Pigmentzubereitung | X [g] | Umsetzungsprodukt aus |
|---|---|---|
| VI | 1,08 | DE-A-2 701 292, Bsp. A |
| VII | 1,08 | DE-A-2 701 292, Bsp. B |
| VIII | 1,08 | DE-A-2 701 292, Bsp. D |
| IX | 1,08 | DE-B-1 767 822, Bsp. 1 |
| X | 1,09 | DE-B-1 767 822, Bsp. 10 |

Die Vergleichsfarben 2 und 4 werden mit dem nach Beispiel 11 c) erhaltenen Pigment nach A3) und A4) hergestellt. Die Prüfung der Druckfarben erfolgte nach B). Die Ergebnisse sind in der Tabelle 6 unter Beispiele VI bis X zusammengefaßt.

Beispiel 34

a) Zubereitung: 100 g des nach Beispiel 1 c) hergestellten Flavanthronpigments werden mit 5 g des Bisharnstoffes der Formel

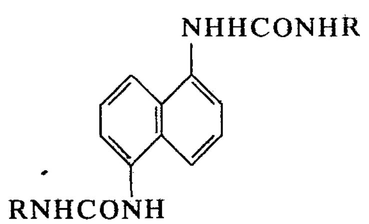

$$R = -(CH_2)_3-O-(C_2H_4O)_2-C_4H_9$$

homogen gemischt.

b) Einbrennlackierung: Nach den Angaben unter C) wird ein Volltonlack und ein Weißverschnitt hergestellt. Zum Vergleich werden ein Volltonalck und ein Weißverschnitt mit dem nach Beispiel 1 c) erhaltenen Pigment hergestellt. Die mit diesen Lacken erhaltenen Färbungen wurden nach D) geprüft und beurteilt:
Die mit der erfindungsgemäßen Zubereitung erhaltene Volltonfärbung ist ein wenig heller und deutlich lasierender als die mit dem Vergleichspigment erhaltene. Der Weißverschnitt weist bei gelberem Farbton ein Färbeäquivalent von 95 zum Vergleich = 100 bei praktisch gleicher Reinheit des Farbtones auf.
Praktisch gleiche Färbungen erhält man, wenn man die Zubereitung im Einbrennlack durch Anreiben des nach Beispiel 1 c) erhaltenen Pigments und des Bisharnstoffes herstellt.

Beispiel 35

Es wird wie im Beispiel 34 verfahren, jedoch enthält die Pigmentzubereitung 5%, bezogen auf Flavanthronpigment, des Bisharnstoffes aus 1,5-Naphthylendiisocyanat und 3-Tridecyloxypropylamin (1 : 2 Mol).

Die Auswertung der erhaltenen Volltonfärbung und des Weißverschnittes ist in der Tabelle 8 enthalten.

Vergleichsversuche XI bis XIII (zum Stand der Technik)

a) Die Zubereitungen wurden nach Beispiel 34 a) hergestellt, wobei als Zusätze verwendet wurden:

| Zubereitung | Zusatz aus |
|---|---|
| XI | DE-A-2 701 292, Bsp. B |
| XII | DE-A-2 701 292, Bsp. D |
| XIII | DE-B-1 767 822, Bsp. 10 |

Menge an Zusatz: 5%, bezogen auf Pigment.

b) Die Einbrennlackierungen wurden genau wie die des Beispiels 34 b) hergestellt und die Färbungen nach D) beurteilt. Das Ergebnis ist in der Tabelle 8 zusammen mit dem der Beispiele 34 und 35 gegenübergestellt.

Tabelle 8

Flavanthron

| Bsp. | X [g] | Zusatz | Färbung Weißverschnitt FÄ | $\Delta$ T | $\Delta$ S | Vollton Farbton | Lasur |
|---|---|---|---|---|---|---|---|
| Vgl. | 0 | – | 100 | 2,53 | 4,57 | (Vergleich) | |
| 34 | 5 | 1,5-$C_{10}H_8$–[NHCONH–$(CH_2)_3$–O–$(C_2H_4O)_2$–$C_4H_9]_2$ | 95 | 2,45 | 4,59 | ein wenig heller | deutlich lasierender |
| XI | 5 | DE-A-2 701 292, Bsp. B | 81 | 2,45 | 4,57 | | ein wenig lasierender als Vgl. |
| XII | 5 | DE-A-2 701 292, Bsp. D | 90 | 2,47 | 4,55 | wie Vgl. | |
| XIII | 5 | DE-B-1 767 822, Bsp. 10 | 98 | 2,49 | 4,55 | | |
| 35 | 5 | 1,5-$C_{10}H_8$–[NHCONH–$(CH_2)_3$–O–$C_{13}H_{27}]_2$ | 68 | 2,38 | 4,56 | | deutlich lasierender |

Beispiel 36

a) Die Zubereitung wird im Bindemittel hergestellt.
b) Einbrennlackierung: Es wird ein Buntlack hergestellt, wobei 5 g des in Beispiel 3 c) beschriebenen Mahlgutes (Indanthron) und 0,35 g des aus 1,5-Naphthylendiisocyanat und 3-(2'-Äthylhexoxy)-propylamin erhaltenen Bisharnstoffes in die Bindemittellösung nach C1) eingearbeitet werden. Aus diesem Buntlack werden nach C2) und C3) ein Volltonlack und ein Weißverschnitt hergestellt. Mit dem Mahlgut des Beispiels 3 c) wurden die Vergleichsfärbungen hergestellt. Aus den Lacken werden nach D1) und D2) Lackierungen hergestellt und diese mit den Vergleichsfärbungen verglichen. Die Ergebnisse sind in der Tabelle 9 zusammengefaßt.

Vergleichsbeispiele XIV bis XVI (zum Stand der Technik)

a) Die Zubereitungen wurden durch Einarbeiten von Pigment und Zusatzstoff in die Bindemittellösung wie Beispiel 36 b) hergestellt und entsprechend zu Lacken verarbeitet, aus denen Färbungen hergestellt wurden. Es wurden folgende Zusatzstoffe verwendet:

| Zubereitung | Zusatz aus |
|---|---|
| XIV | DE-A-2 701 292, Bsp. A |
| XV | DE-A-2 701 292, Bsp. D |
| XVI | DE-B-1 767 822, Bsp. 1 |

Menge an Zusatz: 10%, bezogen auf Pigment.

Die Färbungen wurden mit den nach Beispiel 36 erhaltenen verglichen. Die Ergebnisse sind in der Tabelle 9 zusammengestellt.

Tabelle 9 Indanthron

| Bsp. | X [g] | Zusatz | Färbung Weißverschnitt FÄ | ΔT | ΔS | Vollton Farbton | Lasur |
|---|---|---|---|---|---|---|---|
| Vgl. | 0 | — | 100 | 16,92 | 3,15 | (Vergleich) | |
| 36. | 0,35 | $1{,}5\text{-}C_{10}H_8\text{—}[NHCONH\text{—}(CH_2)_3\text{—}OCH_2\text{—}CH(C_2H_5)\text{—}C_4H_9]_2$ | 83 | 16,85 | 3,31 | glänzender | deutlich lasierender |
| XIV | 0,5 | DE-A-2 701 292, Bsp. A | 116 | 16,99 | 3,16 | wie Vergleich | |
| XV | 0,5 | DE-A-2 701 292, Bsp. D | 108 | 16,98 | 3,19 | wie Vergleich | |
| XVI | 0,5 | DE-B-1 767 822, Bsp. 10 | 117 | 16,95 | 3,17 | wie Vergleich | |

## Beispiel 37

a) Zubereitung: 100 g des nach c) erhaltenen Perylimidpigments werden mit 5 g des Bisharnstoffes

$$1,5\text{-}C_{10}H_8-[NHCONH-(CH_2)_3-O-(CH_2-CH_2-O)_2C_4H_9]_2$$

homogen gemischt.

b) Einbrennlackierung: Die Lacke werden nach C) und die Färbungen nach D1) und D2) hergestellt. Die Vergleichsfärbungen wurden mit dem nach c) erhaltenen Pigment nach D1) und D2) hergestellt. Die mit der erfindungsgemäßen Zubereitung erhaltene Volltonfärbung ist etwas heller und etwas lasierender als der Vergleich. Der Weißverschnitt weist bei praktisch gleichem Farbton und gleicher Reinheit ein Färbeäquivalent von 92 auf (Vergleich = 100).

c) In einer 10 $m^3$-Kugelmühle (Füllung: 15,5 t Eisenkugeln von 20 bis 25 mm Ø) werden 1100 kg rohes Perylen-3,4,9,10-tetracarbonsäurediimid bei 80°C 30 Stunden gemahlen. Das Mahlgut wird ausgetragen und mit der 3fachen Gewichtsmenge Phenol 5 Stunden auf 180°C erwärmt. Dann wird das Gemisch mit Wasser verdünnt und mit Natronlauge alkalisch gestellt. Das Pigment wird filtriert und mit warmem Wasser neutral gewaschen. Das Filtergut wird dann schonend getrocknet.

## Beispiel 38

a) Die Zubereitung wird durch Mischen des nach c) erhaltenen Mahlgutes mit dem Bisharnstoff im Lackbindemittel hergestellt.

b) Einbrennlackierung: Nach C1) wird durch Dispergieren des nach c) erhaltenen Mahlgutes (5 g) und 0,45 g des Bisharnstoffes

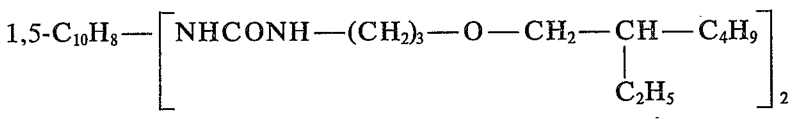

in 95 g eines Einbrennlackes (Basis: Alkyd-Melamin-Harz, 35%ige Lösung in Xylol) ein Buntlack hergestellt. Aus diesem wird nach C2) und C3) ein Volltonlack und ein Weißverschnitt hergestellt, aus denen nach D1) bzw. D2) Einbrennlackierungen hergestellt werden. Die Vergleichsfärbungen werden mit dem Mahlgut c) ohne Zusatz des Bisharnstoffes hergestellt. Die Volltonfärbung ist etwas heller und etwas lasierender als der Vergleich. Der Weißverschnitt ist ($\Delta T = -0{,}37$, $\Delta S = +0{,}17$) gelber, brillanter, reiner und farbstärker als der Vergleich [FÄ 77 : 100 (= Vergleich)].

In einer 2 $m^3$-Kugelmühle (Füllung: 3 t Eisenkugeln von 20 bis 25 mm Ø) werden 300 kg rohes Perylen-3,4,9,10-tetracarbonsäure-N,N'-bismethylimid (hergestellt durch Umsetzen von Perylentetracarbonsäuredianhydrid mit Methylamin) 30 Stunden gemahlen. Das Mahlgut wird direkt verwendet.

## Beispiel 39

a) Zubereitung: 100 g des unter c) beschriebenen Mahlgutes werden mit 9 g des Bisharnstoffes

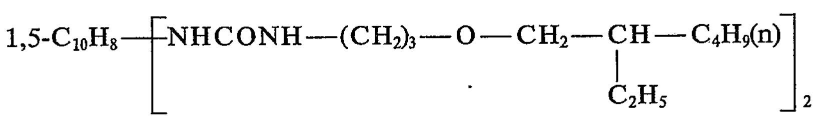

in einer Kaffeemühle gemahlen (homogenisiert).

b) Einbrennlackierung: Aus der Zubereitung a) werden nach C) und D) Einbrennlackierungen hergestellt. Die Vergleiche werden nach C) und D) aus dem Mahlgut von c) hergestellt. Die Volltonfärbung ist zum Vergleich wenig dunkler und lasierender. Der Weißverschnitt ist ($\Delta T = -0{,}3$ $\Delta S = +0{,}06$) gelber, reiner, etwas brillanter und deutlich farbstärker (FÄ = 81) als der Vergleich (= 100).

c) In einer 2 $m^3$-Kugelmühle (Füllung: 3 t Eisenkugeln von 20 bis 25 mm Ø) werden 200 kg rohes

Perylen-3,4,9,10-tetracarbonsäure-N,N′-bis(4′-äthoxyphenylimid) 35 Stunden gemahlen. Das Mahlgut wird als solches verwendet.

Beispiele 40 bis 47

a) Die Zubereitungen wurden durch Mischen der Handelspigmente mit 9%, bezogen auf Pigment, des Bisharnstoffes

$$1{,}5\text{-}C_{10}H_8-[NHCONH-(CH_2)_3-O-C_{13}H_{27}]_2$$

in einer Kaffeemühle hergestellt. Es wurden folgende Pigmente verwendet:

| Bsp. | Pigment |
|---|---|
| 40 | hergestellt nach DE-A-2 357 077, Bsp. 2 |
| 41 | Nickelkomplex des 2,3-Dihydroximinobuttersäureanilids |
| 42 | Flavanthron (Pig. Yellow 24; C.I. 70 600) |
| 43 | Nickelkomplex des Dihydroximino-buttersäure-(2-anisidids) |
| 44 | Pigm. Red 178; C.I. 71 155 |
| 45 | Pigm. Violet 19; C.I. 46 500 |
| 46 | Pigm. Violet 23; C.I. 51 319 |
| 47 | Pigm. Orange 43; C.I. 71 105 |

b) Einbrennlackierungen: Mit den Zubereitungen a) wurden nach C) und D) Einbrennlackierungen im Vollton und im Weißverschnitt hergestellt und die Färbungen mit solchen verglichen, die mit den Pigmenten (ohne Zusatz an Bisharnstoff) erhalten wurden. Die coloristischen Vergleiche sind in der Tabelle 10 zusammengefaßt.

Tabelle 10

| Beispiel | Handelspigment | Färbung | | | | |
|---|---|---|---|---|---|---|
| | | Weißverschnitt | | | Vollton/Glanz | |
| | | FÄ | $\Delta$T | $\Delta$S | mit Zusatz | ohne Zusatz |
| 40 | hergestellt nach DE-A-2 357 077, Bsp. 2 | 95 | −0,09 | −0,02 | 76 | 70 |
| 41 | Nickelkomplex des 2,3-Dihydroximinobuttersäureanilids | 94 | −0,09 | +0,03 | 54 | 40 |
| 42 | Flavanthron | 95 | −0,04 | +0,02 | 100 | 70 |
| 43 | Nickelkomplex des 2,3-Dihydroximino-buttersäure-(2-anisidids) | 72 | −0,33 | +0,01 | 98 | 76 |
| 44 | Pigment Red 178; C.I. 71 155 | 100 | −0,01 | +0,01 | 93 | 83 |
| 45 | Pigment Violet 19; C.I. 46 500 | 86 | −0,01 | +0,05 | 94 | 87 |
| 46 | Pigment Violet 23; C.I. 51 319 | 100 | −0,11 | +0,10 | 93 | 76 |
| 47 | Pigment Orange 43; C.I. 71 105 | 84 | +0,09 | 0,06 | 93 | 46 |

FÄ des jeweiligen Vergleichs = 100

Beispiel 48

a) Zubereitung: 100 g Kupferphthalocyaninpigment [hergestellt nach Beispiel 11 c)] und 9 g des Bisharnstoffes

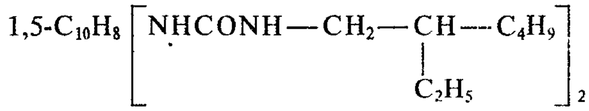

werden homogen gemischt (Kaffeemühle).

b) Einbrennlackierungen wurden mit a) nach C) und D) im Vollton und im Weißverschnitt hergestellt. Die Vergleichsfärbungen wurden mit dem nach Beispiel 11 c) erhaltenen Pigment hergestellt. Die Bewertung der Lackierungen ist in der Tabelle 11 zusammengestellt.

Beispiele 49 bis 52

a) Die Zubereitung wird entsprechend Beispiel 48 a) hergestellt, jedoch werden die in der Tabelle 11, Spalte 3, angegebenen Bisharnstoffe in der Menge X zur Herstellung der Zubereitungen verwendet.

b) Die Einbrennlackierungen wurden wie bei Beispiel 48 b) hergestellt. Die Bewertung der erhaltenen Lackierungen ist in der Tabelle 11 zusammengefaßt.

Vergleichsbeispiele XVII bis XX (zum Stand der Technik)

a) Die Zubereitungen wurden entsprechend Beispiel 48 a) hergestellt, jedoch wurden als Zusätze angewendet:

| Zubereitung | Zusatz hergestellt nach |
|---|---|
| XVII | DE-A-2 701 292, Bsp. A |
| XVIII | DE-A-2 701 292, Bsp. B |
| XIX | DE-B-1 767 822, Bsp. 1 |
| XX | DE-B-1 767 822, Bsp. 10 |

Menge jeweils 9 g (= 9%, bezogen auf Pigment).

b) Die Einbrennlackierungen wurden wie beim Beispiel 48 b) hergestellt. Die Bewertung der erhaltenen Lackierungen ist in der Tabelle 11 zusammengefaßt. Das Kupferphthalocyaninpigment kristallisiert im Einbrennlack zu Nadeln, deren Länge zwischen 0,3 und 0,8 µm liegen. Demgegenüber tritt bei den Zubereitungen der Beispiele 49 bis 52 praktisch keine Teilchenvergrößerung im Einbrennlack ein.

Tabelle 11 β-Kupferphthalocyanin

| Bsp. | X [g] | Zusatz R = 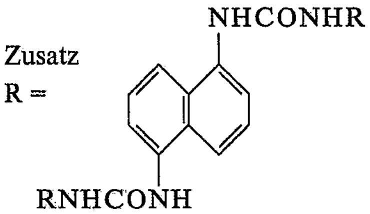 | Färbung Weißverschnitt FÄ gegen Vergleich | $\Delta$ T | $\Delta$ S | Vollton | |
|---|---|---|---|---|---|---|---|
| 48 | 9 | $-CH_2-CH-C_4H_9$<br>$C_2H_5$ | 98 | +0,02 | +0,07 | lasierender als | |
| 49 | 9 | $-C_{13}H_{27}$ | 86 | +0,05 | +0,16 | deutlich lasierender als | |
| 50 | 9 | $-(CH_2)_3-O-CH_2-CH-C_4H_9$<br>$C_2H_5$ | 83 | +0,06 | +0,18 | | |
| 51 | 9 | $-(CH_2)_3-O-(CH_2-CH_2-O)_2-C_4H_9$ | 87 | +0,07 | +0,15 | | |
| 52 | 9 | $-(CH_2)_3-O-(CH_2-CH_2-O)_3-C_4H_9$ | 85 | +0,08 | +0,17 | | |
| Vgl. | 0 | — | 100 | T = 17,73 | S = 4,22 | Vergleich | |
| XVII | 9 | DE-A-2 701 292, Bsp. A | 111 | +0,04 | +0,05 | ein wenig lasierender als der Vergleich | Stand der Technik |
| XVIII | 9 | DE-A-2 701 292, Bsp. B | 113 | +0,04 | +0,05 | | |
| XIX | 9 | DE-B-1 767 822, Bsp. 1 | 105 | +0,06 | +0,09 | | |
| XX | 9 | DE-B-1 767 822, Bsp. 10 | 110 | +0,04 | +0,03 | | |

## Beispiel 53

a) Die Zubereitung wird durch Mahlen von 300 g rohem Kupferphthalocyanin (hergestellt aus o-Phthalodinitril und Kupfer-I-chlorid nach dem Lösungsmittelverfahren) und 15 g des Bisharnstoffes

$$1{,}5\text{-}C_{10}H_8[NHCONH-(CH_2)_3-O-C_{13}H_{27}]_2$$

in einer 5-l-Kugelmühle (Füllung: 3 kg Eisenkugeln von 20 bis 30 mm ∅) erhalten. Mahldauer: 35 Stunden bei ungefähr 55 U/Min. Das Mahlgut wird direkt verwendet.

b) Einbrennlackierungen: Nach C1), C3) und D2) wird ein Weißverschnitt hergestellt und mit der Lackierung verglichen, die mit dem nach a), jedoch in Abwesenheit des Bisharnstoffes gemahlenen rohen Kupferphthalocyanin hergestellt wurde. Außerdem wurde die Dispergierhärte der Zubereitung a) nach D3) bestimmt.
Die Bewertung ist in der Tabelle 12 zusammengefaßt.

## Beispiele 54 und 55

a) Die Zubereitung wird wie im Beispiel 53 a) angegeben hergestellt, jedoch wird der Bisharnstoff durch den in der Tabelle 12, Spalte 3, angegebenen in der unter X genannten Menge ersetzt.

b) Die Einbrennlackierungen werden wie im Beispiel 53 b) angegeben hergestellt.
Die Bewertung der Lackierungen ist in der Tabelle 12 zusammengestellt.

Tabelle 12 β-Kupferphthalonin

| Bsp. | X [g] | Zusatz R = 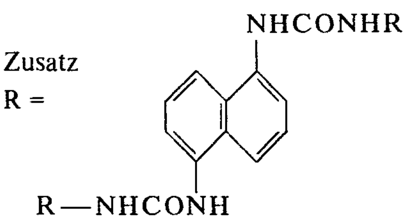 | Färbung Weißverschnitt FÄ | T | S | Dispergierhärte |
|---|---|---|---|---|---|---|
| 53 | 15 (≙5%) | $-(CH_2)_3-O-C_{13}H_{27}$ | 85 | + 0,02 | + 0,11 | 1 |
| 54 | 15 (≙5%) | $-(CH_2)_3-O-CH-C_4H_9$<br>$\quad\quad\quad\quad\quad\; \vert$<br>$\quad\quad\quad\quad\; C_2H_5$ | 82 | + 0,03 | + 0,13 | 3 |
| 55 | 27 (≙9%) | $-(C_{13}H_{27})$ | 85 | + 0,02 | + 0,09 | 5 |
| Vgl. | 0 | — | 100 | T=17,64 | S=4,17 | 26 |

## Beispiel 56

a) Zubereitung: 100 g Kupferphthalocyaninpigment (α-Modifikation, nicht stabilisiert) und 9 g des Bisharnstoffes

$$1{,}5\text{-}C_{10}H_8\left[NHCO-NH-CH_2-\underset{\displaystyle C_2H_5}{\underset{\vert}{CH}}-C_4H_9\right]_2$$

werden homogen gemischt.

b) Mit der erhaltenen Zubereitung wird nach C1), C3) und D2) ein Weißverschnitt hergestellt.
Zum Vergleich wird ein Weißverschnitt aus dem für a) verwendeten Kupferphthalocyaninpigment der α-Modifikation hergestellt.

d) Die Zubereitung a) und das zur Herstellung der Zubereitung a) verwendete α-Kupferphthalocyanin werden außerdem einem Toluoltest unterworfen: Je 1 g Pigment werden in 100 g Toluol 2 Stunden auf Rückflußtemperatur (110°C) erhitzt. Das so behandelte Pigment wird isoliert und röntgenographisch der Gehalt an der α-Modifikation bestimmt. Außerdem wurden von den behandelten Pigmentproben elektronenmikroskopische Aufnahmen (Vergrößerung: 20 000) hergestellt, um einen Überblick über die Kristallgröße zu erhalten.
Die Ergebnisse sind in der Tabelle 13 zusammengestellt. In der Tabelle 13 wurde das Färbeäquivalent FÄ auf den Weißverschnitt der Zubereitung des Beispiels 62 (=100) bezogen.

c) Rohes Kupferphthalocyanin (hergestellt aus o-Phthalodinitril und Kupfer-I-chlorid in Gegenwart von Ammoniak in Nitrobenzol; Gehalt an Chlor ≤0,1%) wird bei Raumtemperatur in der 8fachen Gewichtsmenge 96%iger Schwefelsäure gelöst und die Lösung auf Wasser/Eis ausgetragen.
Das Pigment wird filtriert, neutral gewaschen, getrocknet und zu Pulver gemahlen.

Beispiele 57 bis 62

a) Die Zubereitung wird analog Beispiel 56 a) hergestellt, jedoch werden je 9 g des in der Tabelle 13 unter den Beispielen 57 bis 62 in Spalte 3 genannten Bisharnstoffes angewendet.

b) Die Weißverschnitte werden wie beim Beispiel 56 b) hergestellt. Der Toluoltest und dessen Auswertung erfolgt wie beim Beispiel 56 b).
Die Ergebnisse sind in der Tabelle 13 zusammengefaßt.

Vergleichsversuche XXI bis XXIV (zum Stand der Technik)

a) Die Zubereitungen werden analog Beispiel 56 a) hergestellt, jedoch wird der Bisharnstoff durch Zusätze des Standes der Technik ersetzt:

| Zubereitung | Zusatz hergestellt nach |
|---|---|
| XXI | DE-A-2 701 292, Bsp. B |
| XXII | DE-A-2 701 292, Bsp. D |
| XXIII | DE-B-1 767 822, Bsp. 1 |
| XXIV | DE-B-1 767 822, Bsp. 10 |

Menge: jeweils 9 g (= 9%, bezogen auf Pigment).

b) Die Weißverschnitte werden wie beim Beispiel 56 b) angegeben hergestellt. Der Toluoltest und dessen Auswertung erfolgt wie beim Beispiel 56 d) angegeben ist.
Die Ergebnisse sind in der Tabelle 13 zusammengestellt.

Tabelle 13

| Bsp. | X [g] | Zusatz R = 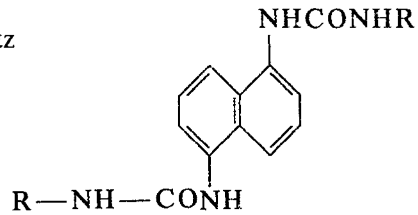 | Färbung Weißverschnitt FÄ | T | S | Toluoltest Gehalt α-Mod. [%] | Kristall Größe [μm] |
|---|---|---|---|---|---|---|---|
| — | 0 | — | 309 | 17,50 | 3,60 | 7 | 2–10 |
| 56 | 9 | $-CH_2-CH(C_2H_5)-C_4H_9$ | 92 | 17,29 | 4,06 | 94 | 0,1 |
| 57 | 9 | $-(CH_2)_3-O-CH_2-CH(C_2H_5)-C_4H_9$ | 93 | 17,30 | 4,08 | 91 | 0,1 |
| 58 | 9 | $-C_{13}H_{27}$ | 99 | 17,28 | 4,01 | 90 | 0,1 |
| 59 | 9 | $-(CH_2)_3-O-C_{13}H_{27}$ | 98 | 17,30 | 4,05 | 90 | 0,1 |
| 60 | 9 | $-(CH_2)_3-O-C_8H_{17}$(n) | 99 | 17,32 | 3,99 | 91 | 0,1 |
| 61 | 9 | $-(CH_2)_3-O-C_{10}H_{21}$(n) | 99 | 17,30 | 4,00 | 94 | 0,1 |
| 62 | 9 | $-C_{12}H_{25}$(Vgl.) | 100 | 17,30 | 4,04 | 65 | 0,1–0,2 |
| XXI | 9 | DE-A-2 701 292, Bsp. B | 121 | 17,43 | 4,03 | 12 | bis 10 |
| XXII | 9 | DE-A-2 701 292, Bsp. D | 138 | 17,44 | 3,98 | 9 | bis 7 |
| XXIII | 9 | DE-B-1 767 822, Bsp. 1 | 112 | 17,40 | 4,03 | 11 | bis 5 |
| XXIV | 9 | DE-B-1 767 822, Bsp. 10 | 111 | 17,40 | 4,04 | 7 | bis 10 |

Beispiel 63

a) Zubereitung: 400 g Hexadecachlorokupferphthalocyanin und 36 g des aus 1,5-Naphthylendiisocyanat und 3-(2'-Äthylhexoxy)-propylamin (1 : 2 Mol) erhaltenen Bisharnstoffes werden 24 Stunden in einer 4-l-Schwingmühle (Füllung: 8 kg Eisenkugeln von 25 mm ∅) gemahlen.

b) Mit der Zubereitung a) werden nach C) und D) Purtonfärbungen und Weißverschnittfärbungen hergestellt.
Zum Vergleich werden entsprechende Färbungen mit einem Mahlgut hergestellt, das durch Mahlen nach a) in Abwesenheit des Bisharnstoffes erhalten wurde.
Die Ergebnisse sind in der Tabelle 14 zusammengestellt.

Beispiel 64

a) Zubereitung: 400 g Polybromchlorkupferphthalocyanin (60% Br und 7,9% Cl) werden zusammen mit 36 g des in Beispiel 63 a) angegebenen Bisharnstoffes in der in Beispiel 63 a) angegebenen Mühle 24 Stunden gemahlen.

b) Mit dem nach a) erhaltenen Gemisch werden nach C) und D) Purton- und Weißschnittfärbungen hergestellt.
Zum Vergleich wurden entsprechende Färbungen mit einem Mahlgut hergestellt, das nach a), jedoch ohne Bisharnstoff erhalten wurde.
Die Ergebnisse sind in der Tabelle 14 zusammengestellt.

Tabelle 14 Polyhalogenkupferphthalonin

| Bsp. | X<br>[g] | Zusatz<br>R = | Färbung<br>Weißverschnitt<br>FÄ | <br><br>$\Delta$T<br>gegen Vergleich | <br><br>$\Delta$S | <br>Vollton |
|---|---|---|---|---|---|---|
| | | 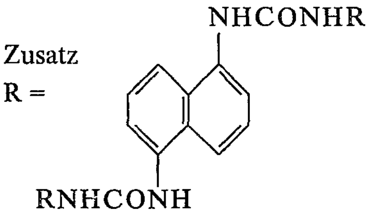 | | | | |
| Vgl. | 0 | — | 100 | T = 20,40 | S = 4,43 | Vergleich |
| 63 | 9 | $-(CH_2)_3-O-CH_2-CH-C_4H_9$<br>$\vert$<br>$C_2H_5$ | 71 | -0,03 | +0,18 (reiner als Vergleich) | deutlich lasierender |
| Vgl. | 0 | — | 100 | T = 21,11 | S = 4,69 | Vergleich |
| 64 | 9 | $-(CH_2)_3-O-CH_2-CH-C_4H_9$<br>$\vert$<br>$C_2H_5$ | 92 | -0,02 | +0,16 (reiner als Vergleich) | lasierender |

**Patentansprüche**

1. Pigmentzubereitung, enthaltend

a) ein feinteiliges organisches Pigment und
b) mindestens ein Harnstoffderivat der Formel

$$K-(NH-CO-NH-R)_2 \qquad (I)$$

in der R $C_{12}$- bis $C_{18}$-Alkyl, $C_{12}$- bis $C_{18}$-Alkenyl, $C_8$- bis $C_{18}$-Alkoxypropyl oder

$$-(CH_2)_3-O-(C_2H_4O)_n-R^1,$$

worin $R^1$ für $C_2$- bis $C_8$-Alkyl oder Phenyl und n für 1, 2, 3 oder 4 stehen und K 1,5-Naphthylen oder 4,4'-Diphenylenmethan bedeuten.

2. Pigmentzubereitung gemäß Anspruch 1, dadurch gekennzeichnet, daß K 1,5-Naphthylen ist.

3. Pigmentzubereitung gemäß Anspruch 1 oder 2, dadurch gekennzeichnet, daß R für $C_{13}$- bis $C_{18}$-Alkyl, Oleyl, $C_8$- bis $C_{18}$-Alkoxy-propyl oder für

$$-(CH_2)_3-O-(C_2H_4O)_m-R^7$$

steht, worin m = 2 oder 3 und $R^7$ Äthyl, n-Propyl, n-Butyl oder Phenyl bedeuten.

4. Pigmentzubereitung gemäß Anspruch 1, 2 oder 3, dadurch gekennzeichnet, daß diese — bezogen auf (a) — 2 bis 20 Gew.-% (b) enthalten.

5. Pigmentzubereitungen gemäß Anspruch 1, 2 oder 3, dadurch gekennzeichnet, daß diese — bezogen auf (a) — 5 bis 15 Gew.-% (b) enthalten.

6. Pigmentzubereitungen gemäß den Ansprüchen 1 bis 5, dadurch gekennzeichnet, daß (a) ein organisches Pigment ist, das sich von Anthrachinon, vom Anthrachinon abgeleiteten kondensierten Ringsystemen, von der Perylen-3,4,9,10-tetracarbonsäure oder von deren Diimid, von Chinophthalon, von Dioxazin, vom Chinacridon oder vom Phthalocyanin ableitet.

7. Pigmentzubereitungen gemäß den Ansprüchen 1 bis 5, dadurch gekennzeichnet, daß a) Flavanthron, Indanthron, chloriertes Indanthron mit 1 bis 4 Chloratomen, Pyranthron, Dichlorpyranthron, Monobromdichlorpyranthron, Perylen-3,4,9,10-tetracarbonsäurediimid, worin die Imidgruppen unsubstituiert, durch $C_1$- bis $C_4$-Alkyl oder durch phenylische oder heterocyclische Reste substituiert sein können und worin die phenylischen und heterocyclischen Reste noch nicht wasserlöslich machende Substituenten tragen können, Anthrapyrimidincarbonsäureamide, Violanthron, Isoviolanthron, Dioxazinpigment, Kupferphahtlocyanin, das bis zu 2 Chlor im Molekül enthalten kann, Polychlorkupferphthalocyanin oder Polybrom-chlorkupferphthalocyanin mit bis zu 14 Bromatomen im Molekül.

8. Pigmentzubereitung gemäß Anspruch 1, 4 oder 5, enthaltend als (a) ein Kupferphthalocyaninpigment und als (b) mindestens ein Harnstoffderivat der Formel

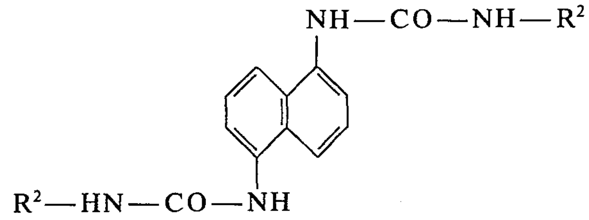

in der $R^2$ für $C_8$- bis $C_{10}$-Alkyl, $C_{13}$- bis $C_{18}$-Alkyl oder für 3-($C_8$- bis $C_{18}$-Alkoxy)propyl steht.

9. Verwendung der Zubereitungen gemäß den Ansprüchen 1 bis 8 zur Herstellung von Druck- und Lackfarben.

10. Lack- oder Druckfarben, enthaltend Pigmentzubereitungen gemäß den Ansprüchen 1 bis 8.

**Claims**

1. A pigment formulation containing

a)a finely divided organic pigment,
b) at least one urea derivative of the formula

$$K-(NH-CO-NH-R)_2 \qquad (I)$$

where R is $C_{12}-C_{18}$-alkyl, $C_{12}-C_{18}$-alkenyl, $C_8-C_{18}$-alkoxypropyl or

$$-(CH_2)_3-O-(C_2H_4O)_n-R^1,$$

where $R^1$ is $C_2-C_8$-alkyl or phenyl and n is 1, 2 3 or 4, and K is 1,5-naphthylene or 4,4'-diphenylenemethane.

2. A pigment formulation as claimed in claim 1, characterized in that K is 1,5-naphthylene.

3. A pigment formulation as claimed in claim 1 or 2, characterized in that R is $C_{13}-C_{18}$-alkyl, oleyl, $C_8-C_{18}$-alkoxypropyl or

$$-(CH_2)_3-O-(C_2H_4O)_m-R^7,$$

where m is 2 or 3 and $R^7$ is ethyl, n-propyl, n-butyl or phenyl.

4. A pigment formulation as claimed in claim 1, 2 or 3, characterized in that it contains from 2 to 20% by weight of (b), based on (a).

5. A pigment formulation as claimed in claim 1, 2 or 3, characterized in that it contains from 5 to 15% by weight of (b), based on (a).

6. A pigment formulation as claimed in claims 1 to 5, characterized in that (a) is an organic pigment which is based on anthraquinone, on fused ring systems derived from anthraquinone, on perylene-3,4,9,10-tetracarboxylic acid or its diimide, on quinophthalone, on dioxazine, on quinacridone or on phthalocyanine.

7. A pigment formulation as claimed in claims 1 to 5, characterized in that (a) is flavanthrone, indanthrone, chlorinated indanthrone containing from 1 to 4 chlorine atoms, pyranthrone, dichloropyranthrone, monobromodichloropyranthrone, perylene-3,4,9,10-tetracarboxylic acid diimide, wherein the imide groups may be unsubstituted or substituted by $C_1-C_4$-alkyl or a phenyl or heterocyclic radical, and wherein the phenyl and heterocyclic radicals may additionally carry substituents which do not confer solubility in water, anthrapyrimidinecarboxylic acis amides, violanthrone, isoviolanthrone, dioxazine pigments, copper phthalocyanine which may contain up to 2 chlorine atoms per molecule, polychloro-copper phthalocyanine or polybromochloro-copper phthalocyanine containing up to 14 bromine atoms per molecule.

8. A pigment formulation as claimed in claim 1, 4 or 5, containing as (a) a copper phthalocyanine pigment and as (b) at least one urea derivative of the formula

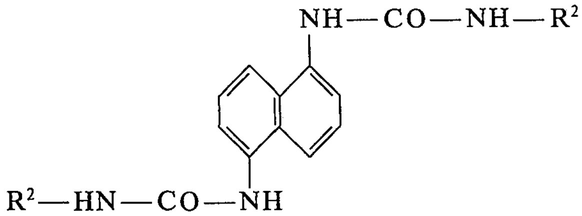

where $R^2$ is $C_8-C_{10}$-alkyl, $C_{13}-C_{18}$-alkyl or 3-($C_8-C_{18}$-alkoxy)-propyl.

9. Use of the formulations as claimed in claims 1 to 8 for the production of printing inks and paints.

10. Paints or printing inks containing a pigment formulation as claimed in claims 1 to 8.

**Revendications**

1. Préparation pigmentée, caractérisée en ce qu'elle contient

a) un pigment organique finement divisé et

b) au moins un dérivé uréique de formule

$$K-(NH-CO-NH-R)_2 \quad (I)$$

dans laquelle R représente un alcoyle en $C_{12}$ à $C_{18}$, un alcényle en $C_{12}$ à $C_{18}$, un alcoxypropyle en $C_8$ à $C_{18}$ ou

$$-(CH_2)_3-O-(C_2H_4O)_n-R^1,$$

$R^1$ étant mis pour un alcoyle en $C_2$ à $C_8$ ou un phényle et n pour 1, 2, 3 ou 4, et K représente un 1,5-naphtylène ou un 4,4'-diphénylène-méthane.

2. Préparation pigmentée selon la revendication 1, caractérisée en ce que K est un 1,5-naphtylène.

3. Préparation pigmentée selon la revendication 1 ou 2, caractérisée en ce que R est mis pour un alcoyle en $C_{13}$ à $C_{18}$, un oléyle, un alcoxypropyle en $C_8$ à $C_{18}$ ou pour

$$-(CH_2)_3-O-(C_2H_4O)_m-R^7,$$

dans laquelle m = 2 ou 3 et $R^7$ représente un éthyle, un n-propyle, un n-butyle ou un phényle.

4. Préparations pigmentées selon l'une quelconque des revendications 1 à 3, caractérisées en ce qu'elles contiennent — par rapport à (a) + 2 à 20% en poids de (b).

5. Préparations pigmentées selon l'une quelconque des revendications 1 à 3, caractérisées en ce qu'elles contiennent — par rapport à (a) — 5 à 15% en poids de (b).

6. Préparations pigmentées selon l'une quelconque des revendications 1 à 5, caractérisées en ce que (a) est un pigment organique qui dérive de l'anthraquinone, de systèmes à noyaux condensés dérivant de l'anthraquinone, de l'acide pérylène-3,4,9,10-tétracarboxylique ou d'un diimide de celuici, de la quinophtalone, de la dioxazine, de la quinacridone ou de la phtalocyanine.

7. Préparations pigmentées selon l'une quelconque des revendications 1 à 5, caractérisées en ce que (a) est une flavanthrone, une indanthrone, une indanthrone chlorée contenant 1 à 4 atomes de chlore, une pyranthrone, une dichloropyranthrone, une monobromodichloropyranthrone, un diimide d'acide pérylène-3,4,9,10-tétracarboxylique, dans lequel les groupes imides peuvent être non substitués ou substitués par des radicaux phényliques ou hétérocycliques, les radicaux phényliques ou hétérocycliques pouvant encore porter des substituants qui ne rendent pas soluble dans l'eau, un amide d'acide anthrapyrimidinique, une violanthrone, une isoviolanthrone, un pigment dioxazinique, une phtalocyanine de cuivre qui peut contenir jusqu'à 2 chlores dans la molécule, une polychlorophtalocyanine de cuivre ou une polybromochlorophtalocyanine de cuivre contenant jusqu'à 14 atomes de brome dans la molécule.

8. Préparation pigmentée selon la revendication 1, 4 ou 5, caractérisée en ce qu'elle contient, en tant que (a), un pigment de phtalocyanine de cuivre et, en tant que (b), au moins un dérivé uréique de formule

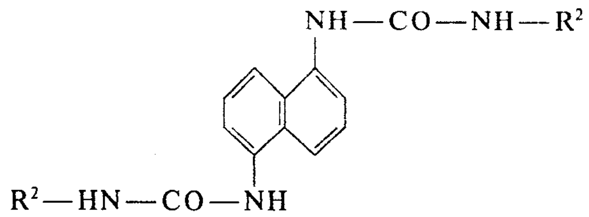

dans laquelle $R^2$ est mis pour un alcoyle en $C_8$ à $C_{10}$, un alcoyle en $C_{13}$ à $C_{18}$ ou pour 3-(alcoxy en $C_8$ à $C_{18}$)-propyle.

9. Utilisation des préparations selon l'une quelconque des revendications 1 à 8 pour la fabrication d'encres d'imprimerie ou de peintures-émail.

10. Peintures-émail ou encres d'imprimerie, contenant des préparations pigmentées selon l'une quelconque des revendications 1 à 8.